# EUROPÄISCHE PATENTSCHRIFT

(11) **EP 1 644 456 B1**
(45) Veröffentlichungstag und Bekanntmachung des Hinweises auf die Patenterteilung: **14.02.2007**
(21) Anmeldenummer: 04740571.7
(22) Anmeldetag: 02.07.2004
(51) Int. Cl.: C09J 5/00

(54) **VORRICHTUNG UND VERFAHREN ZUM BEHANDELN EINER SUBSTANZ MIT UV-STRAHLUNG**
DEVICE AND METHOD FOR TREATING A SUBSTANCE WITH UV RADIATION
DISPOSITIF ET PROCEDE POUR TRAITER UNE SUBSTANCE PAR RAYONNEMENT UV

(30) Priorität: 10.07.2003 DE 10331272
(43) Veröffentlichungstag der Anmeldung: 12.04.2006
(73) Patentinhaber: Hama Tech AG, 75447 Sternenfels (DE)
(72) Erfinder: HUPP, Alexander, 75056 Sulzfeld (DE); MICHELS, Frank, 75438 Knittlingen (DE)
(74) Vertreter: Wagner & Geyer
(86) Internationale Anmeldenummer: PCT/EP2004/007213
(87) Internationale Veröffentlichungsnummer: WO 2005/005563

(56) Entgegenhaltungen:
- WO-A-92/04171
- CH-A- 594 497

## Beschreibung

Die vorliegende Erfindung bezieht sich auf eine Vorrichtung und ein Verfahren zum Behandeln einer Substanz, insbesondere zum Aushärten eines Klebers mit UV-Strahlung.

Es ist in der Technik bekannt, mit UV-Strahlung aushärtbare Kleber bei der Herstellung optischer Datenträger, wie beispielsweise DVDs einzusetzen. Der Kleber wird beispielsweise verwendet, um zwei DVD-Substrathälften miteinander zu verkleben. Dabei wird der Kleber, beispielsweise mit einem bekannten Spinverfahren zwischen den beiden DVD-Substraten verteilt, und anschließend werden die DVD-Hälften zusammengefügt. Für eine rasche Aushärtung des Klebers wird dieser anschließend einer UV-Strahlung ausgesetzt.

Für die Erzeugung der UV-Strahlung ist es bekannt, dotierte Quecksilberstrahler einzusetzen. Derartige Strahler haben jedoch eine begrenzte Lebensdauer von beispielsweise 1.000 bis 1.500 Stunden und sie erzeugen neben der UV-Strahlung auch Infrarotstrahlung, die sich jedoch bei der Aushärtung negativ auf die DVD-Qualität auswirkt.

Aus der WO92/04171 A ist ein Verfahren und eine Vorrichtung zur Aushärtung schmelzbarer Materialien mittels UV-Strahlung bekannt. Zur Aushärtung wird das schmelzbare Material in eine Form gegossen und anschließend in einer CO₂ Atmosphäre UV-Strahlung ausgesetzt, um eine Polymerisierung des schmelzbaren Materials zu bewirken.

Die CH 594 497 A betrifft allgemein einen unter Einwirkung von Licht härtenden Klebstoff zur Verwendung bei der Herstellung eines Laminatgegenstandes.

Ausgehend von diesem bekannten Stand der Technik liegt der vorliegenden Erfindung daher die Aufgabe zugrunde, eine Vorrichtung und ein Verfahren anzugeben, die bzw. das bei langer Lebensdauer der Strahlungsquellen eine gute Behandlung mit UV-Strahlung ermöglicht.

Erfindungsgemäß wird diese Aufgabe bei einer Vorrichtung zum Behandeln von Substanz, insbesondere zum Aushärten eines Klebers, mit UV-Strahlung mit einer Vielzahl von UV-Strahlungsquellen dadurch gelöst, dass die Vielzahl von Strahlungsquellen wenigstens zwei unterschiedliche LED's aufweist, die unterschiedliche UV-Strahlung emittieren. LEDs haben gegenüber Quecksilberstrahlern eine deutlich längere Lebensdauer. Darüber hinaus besitzen die LEDs ein sehr enges Lichtspektrum, so dass die Erzeugung von Infrarotstrahlung, welche sich beispielsweise negativ auf die Qualität der DVD auswirkt, vermieden werden kann. Dieser Vorteil eines engen Lichtspektrums besitzt jedoch auch den Nachteil, dass eine einzelne LED nicht in der Lage ist, sowohl UV-A-/UV-B- als auch UV-C-Licht zu erzeugen. Durch den Einsatz wenigstens zweier unterschiedlicher LEDs lässt sich jedoch ein Lichtspektrum erzeugen, das beispielweise UV-A-/B- und/oder C-Licht enthält.

Gemäß einer bevorzugten Ausführungsform der Erfindung sind wenigstens zwei Gruppen von LEDs vorgesehen, wobei die LEDs innerhalb einer Gruppe jeweils im Wesentlichen dieselbe UV-Strahlung erzeugen, die sich von der durch die LEDs der anderen Gruppe erzeugten UV-Strahlung unterscheidet. Durch das Vorsehen unterschiedlicher Gruppen können größere Flächen mit UV-Strahlung bestrahlt werden und darüber hinaus kann die UV-Lichtzusammensetzung und/oder -konzentration durch die Anzahl der LEDs innerhalb jeder Gruppe eingestellt werden. Bei einer besonders bevorzugten Ausführungsform der Erfindung sind wenigstens drei unterschiedliche LEDs bzw. drei Gruppen von LEDs vorgesehen, wobei die unterschiedlichen LEDs vorzugsweise UV-A-, UV-B- bzw. UV-C-Strahlung erzeugen. Hierdurch kann ein im Wesentlichen vollständiges UV-Spektrum erzeugt werden.

Durch die unterschiedlichen LEDs ist es möglich, dass die durch sie erzeugte Strahlung derart eingestellt wird, dass sie einer vorbestimmten UV-Lichtzusammensetzung und/oder Konzentration entspricht. Dabei ist es insbesondere möglich, die Strahlung derart einzustellen, dass die durch die LEDs erzeugte Strahlung im Wesentlichen der UV-Lichtzusammensetzung und/oder Konzentration eines dotierten Quecksilberstrahlers entspricht. Dies hat den Vorteil, dass bisher verwendete Materialien, beispielsweise UV-Kleber bei der DVD-Herstellung auch in Kombination mit der neuen Vorrichtung verwendet werden können.

Bei einer besonders bevorzugten Ausführungsform der Erfindung weist die durch die LEDs erzeugte Gesamtstrahlung wenigstens in einem Teilbereich der Vorrichtung einen UV-A-Anteil zwischen 67% und 77%, einen UV-B-Anteil zwischen 13% und 23% und einen UV-C-Anteil zwischen 5% und 15 % auf. Insbesondere liegen die jeweiligen Werte bei ungefähr 72% (UV-A), 18% (UV-B) und 10% (UV-C).

Vorteilhafterweise ist die UV-Lichtzusammensetzung und/oder Konzentration räumlich über das Substrat hinweg unterschiedlich. Hierdurch können lokal gezielt unterschiedliche Behandlungsbedingungen geschaffen werden. Dabei weist die UV-Lichtzusammensetzung und/oder Konzentration lokal, insbesondere in einem Randbereich des Substrats, einen höheren UV-C-Anteil auf. Dies ist insbesondere bei der Aushärtung von UV-Klebern zweckmäßig, um durch Anhäufung von UV-C-Licht eine verbesserte Randtrocknung zu erreichen.

Bei einer Ausführungsform der Erfindung ist die UV-Lichtzusammensetzung und/oder Konzentration durch die jeweilige Anzahl und/oder die räumliche Anordnung der unterschiedlichen LEDs voreingestellt. Bei einer weiteren Ausführungsform der Erfindung ist ein Ansteuervorrichtung zum Ansteuern von einzelnen LEDs oder Gruppen von LEDs vorgesehen, wobei die einzelne oder gruppenweise Ansteuerung eine Veränderung der UV-Lichtzusammensetzung und/oder -konzentration während eines Behandlungsvorgangs und/oder räumlich über die zu behandelnde Substanz hinweg ermöglicht.

Die der Erfindung zugrunde liegende Aufgabe wird auch bei einem Verfahren zum Behandeln einer Substanz, insbesondere zum Aushärten eines Klebers, mit UV-Strahlung, mit folgenden Schritten gelöst: Anordnen einer auf UV-Licht ansprechenden Substanz im Strahlungsbereich einer Vielzahl von Strahlungsquellen, die wenigstens zwei unterschiedliche LEDs aufweist, die unterschiedliche UV-Strahlung emittieren; Ansteuern der Vielzahl von UV-Strahlungsquellen, zum Erzeugen einer UV-Strahlung mit einer vorbestimmten UV-Lichtzusammensetzung und/oder -konzentration. Bei diesem Verfahren ergeben sich die schon oben unter Bezugnahme auf die Vorrichtung genannten Vorteile. Vorzugsweise sind wenigstens zwei Gruppen von LEDs vorgesehen, wobei die LEDs innerhalb einer Gruppe jeweils im Wesentlichen dieselbe UV-Strahlung emittieren, die sich von der durch die LEDs der anderen Gruppe emittierten UV-Strahlung unterscheidet. Um ein im Wesentlichen vollständiges UV-Lichtspektrum zu erzeugen, sind vorzugsweise wenigstens drei unterschiedliche LEDs bzw. drei Gruppen von LEDs vorgesehen.

Um die UV-Lichtzusammensetzung und/oder -konzentration flexibel verändern zu können, werden die LEDs vorzugsweise einzeln oder in Gruppen angesteuert. Vorzugsweise wird die UV-Lichtzusammensetzung und/oder - konzentration durch eine entsprechende Ansteuerung der LEDs bzw. der Gruppen von LEDs eingestellt.

Bei einer Ausführungsform der Erfindung wird die UV-Lichtzusammensetzung und/oder -konzentration über die Behandlungsdauer hinweg verändert, um jeweils auf die optimale Behandlungsbedingungen vorzusehen. Vorzugsweise wird die UV-Lichtzusammensetzung und/oder -konzentration räumlich über das Substrat hinweg verändert, um beispielsweise Randeffekte auszugleichen. Insbesondere besitzt die UV-Lichtzusammensetzung und/oder - konzentration lokal, insbesondere in einem Randbereich des Substrats, einen höheren UV-C-Anteil auf.

Um die Ansteuerung der LEDs zu vereinfachen, ist die UV-Lichtzusammensetzung und/oder -konzentration wenigstens teilweise durch die Anzahl und/oder räumliche Anordnung der unterschiedlichen LEDs voreingesetllt. Das erfindungsgemäße Verfahren ist insbesondere geeignet für das Aushärten eines mit UV-Strahlung aushärtbaren Klebers (der im Nachfolgenden als UV-Kleber bezeichnet wird), der zwischen zwei Teilen eines Gegenstandes angeordnet ist, wobei wenigstens ein zu den UV-Strahlungsquellen weisender Teil des Gegenstandes für die UV-Strahlung im Wesentlichen transparent ist. Vorzugsweise ist der UV-Kleber zwischen zwei Halbseiten eines optischen Datenträgers angeordnet.

Die Erfindung wird nachfolgend anhand eines Ausführungsbeispiels der Erfindung unter Bezugnahme auf die Zeichnungen näher erläutert; in den Zeichnungen zeigt
- Fig. 1: eine schematische Seitenansicht einer Vorrichtung zum Aushärten eines UV-Klebers;
- Fig. 2: eine schematische Ansicht von unten auf einen, die UV-Strahlungsquellen tragenden Kopf der Vorrichtung gemäß Fig. 1;
- Fig. 3: eine vergrößerte Detailansicht eines optischen Datenträgers mit einer dazwischen befindlichen Schicht eines UV-Klebers.

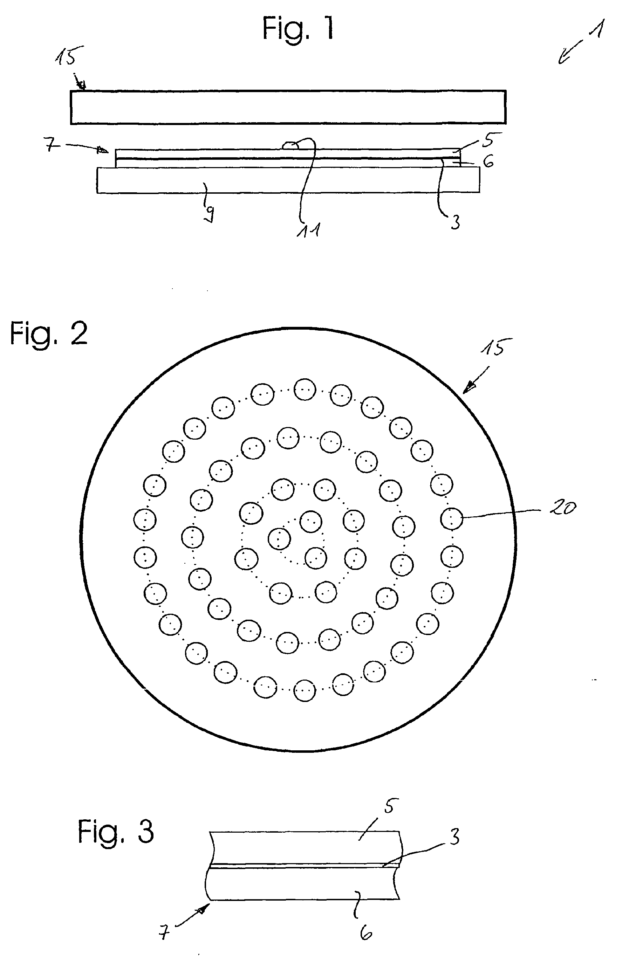

Fig. 1 zeigt eine schematische Seitenansicht einer Vorrichtung 1 zum Aushärten eines Klebers 3, der zwischen zwei Halbseiten 5, 6 eines optischen Datenträgers 7 angeordnet ist. Der Aufbau des optischen Datenträgers ist am Besten in Fig. 3 zu erkennen, die einen vergrößerten Teilschnitt eines optischen Datenträgers 7 zeigt. Wenn es sich bei dem Datenträger 7 beispielsweise um eine DVD handelt, weisen die Substrate 5,6 jeweils eine zu dem Kleber 3 weisende Datenschicht auf, die in bekannter Weise hergestellt ist. Die Kleberschicht 3 kann auf beliebige Weise zwischen den Substrathälften 5, 6 ausgebildet werden. Beispielsweise ist es möglich, die Kleberschicht 3 mittels eines Spinverfahrens auszubilden. Natürlich ist es auch möglich, die Kleberschicht 3 beispielsweise in Form einer Folie mit einem Laminiervorgang auf eine der Substrathäflten aufzubringen, um die Substrathälften nachfolgend zusammenzubringen. Die Kleberschicht 3 ist ein durch UV-Strahlung aushärtbarer Kleber, der nachfolgend als UV-Kleber bezeichnet wird.

Wie in Fig. 1 zu erkennen ist, ist der optische Datenträger 7 auf einer Auflage 9 aufgenommen, die einen Zentrierstift 11 aufweist, der in ein nicht dargestelltes Innenloch des optischen Datenträgers 7 eingeführt ist.

Die Vorrichtung 1 weist ferner einen Kopf 15 auf, der eine Vielzahl von UV-Strahlungsquellen in der Form von LEDs trägt. Fig. 2 zeigt eine Ansicht von unten auf den Kopf 15 mit einer beispielhaften Anordnung von LEDs 20. Die LEDs 20 sind entsprechend der Geometrie einer DVD jeweils auf imaginären, konzentrisch zueinander angeordneten Kreisen angeordnet, wobei die Kreise andeutungsweise mit einer punktierten Linie dargestellt sind. Ein Mittelpunkt der konzentrischen Kreise fällt vorzugsweise mit einem Mittelpunkt des Zentrierstifts 11 der Auflage 9 zusammen.

Obwohl dies in Fig. 2 nicht zu erkennen ist, sind insgesamt drei Gruppen von LEDs 20 vorgesehen, wobei die LEDs innerhalb einer Gruppe jeweils im Wesentlichen dieselbe UV-Strahlung emittieren, die sich von der durch die LEDs der anderen Gruppe emittierten UV-Strahlung unterscheidet. Konkret ist eine Gruppe von LEDs vorgesehen, die jeweils eine UV-A-Strahlung erzeugen, eine Gruppe von LEDs, die jeweils eine UV-B-Strahlung erzeugen und eine Gruppe von LEDs 20, die jeweils eine UV-C-Strahlung erzeugen. Dabei sind die LEDs 20 der unterschiedlichen Gruppen derart zueinander angeordnet, dass sie in einer Ebene der Kleberschicht 3 eine Strahlung mit einer vorbestimmten UV-Lichtzusammensetzung und/oder -konzentration erzeugen. Die vorbestimmte UV-Lichtzusammensetzung und/oder -konzentration ist über die Kleberschicht 3 hinweg im Wesentlichen gleichmäßig, wobei jedoch in dem Randbereich des Klebers der Anteil der UV-C-Strahlung größer ist.

Dieser Anstieg der UV-C-Strahlung im Randbereich kann durch die räumliche Anordnung der LEDs erreicht werden, oder durch eine entsprechende Ansteuerung der LEDs.

Die durch die LEDs erzeugte Strahlung im Bereich der Kleberschicht 3 entspricht im Wesentlichen der UV-Lichtzusammensetzung und/oder -konzentration eines Quecksilberstrahlers.

Durch eine entsprechende Anzahl von LEDs in jeder der Gruppen und eine entsprechende geometrische Anordnung beträgt die Gesamtstrahlung der LEDs im Bereich der Kleberschicht 3 einen UV-A-Anteil zwischen 67% und 77%, einen UV-B-Anteil zwischen 13% und 23% und einen UV-C-Anteil zwischen 5% und 15%. Vorzugsweise beträgt der UV-A-Anteil ungefähr 72%, der UV-B-Anteil ungefähr 18% und der UV-C-Anteil ungefähr 10%, wobei insbesondere im Randbereich der Kleberschicht 3 hiervon abweichende Werte denkbar sind.

Natürlich ist die vorliegende Erfindung nicht auf die zuvor angegebenen Bereiche beschränkt. Diese Bereiche sind jedoch insbesondere in Verbindung mit bisher verwendeten UV-Klebern, die gut auf eine derartige UV-Lichtzusammensetzung und/oder -konzentration ansprechen, geeignet. Bei der Entwicklung neuer UV-Kleber oder anderer auf UV-Licht ansprechende Substanzen kann das UV-Lichtspektrum in entsprechender Weise verändert und für die jeweilige Substanz optimiert werden.

Obwohl Fig. 2 eine beispielhafte räumliche Anordnung der LEDs zeigt, ist die vorliegende Erfindung natürlich nicht auf die konkret dargestellte Anordnung beschränkt. Vielmehr kann eine beliebige geeignete Anordnung der LEDs 20 vorgesehen werden, die eine gewünschte UV-Lichtzusammensetzung und/oder -konzentration in einer Behandlungsebene, wie beispielsweise der Kleberschicht 3 erzeugt.

Die Vorrichtung 1 weist eine nicht näher dargestellte Ansteuervorrichtung für die LEDs 20 auf. Die Ansteuervorrichtung ist so ausgelegt, dass sie einzelne LEDs oder Gruppen von LEDs ansteuern kann. Durch eine entsprechende Ansteuerung der LEDs lässt sich die UV-Lichtzusammensetzung und/oder - konzentration zeitlich über einen Behandlungsvorgang hinweg verändern, um die Behandlung zu optimieren. Darüber hinaus ist es möglich, die UV-Lichtzusammensetzung und/oder -konzentration räumlich über die Kleberschicht 3 hinweg zu verändern. So ist es beispielsweise möglich, trotz einer gleichmäßigen Verteilung der unterschiedlichen LEDs 20 im Kopf 15 unterschiedliche UV-Lichtzusammensetzungs und/oder -konzentrationsprofile zu erzeugen.

Die Erfindung wurde zuvor anhand eines bevorzugten Ausführungsbeispiels der Erfindung beschrieben, ohne auf das konkret dargestellte Ausführungsbeispiel, das sich auf die Aushärtung eines UV-Klebers bezieht, beschränkt zu sein. Insbesondere ist es auch möglich, statt drei unterschiedlicher LEDs nur zwei unterschiedliche LEDs vorzusehen, sofern die zu behandelnde Substanz für eine erfolgreiche Behandlung nur zwei Komponenten des UV-Lichtspektrums benötigt. Darüber hinaus kann natürlich auch eine andere Anordnung der LEDs 20 sowie eine andere Anzahl von LEDs vorgesehen sein. Wesentlich ist, wenigstens zwei unterschiedliche LEDs vorzusehen, die unterschiedliche UV-Strahlung emittieren, die eine gewünschte UV-Lichtzusammensetzung und/oder -konzentration ermöglichen.

## Patentansprüche

1. Vorrichtung zum Behandeln einer Substanz, insbesondere zum Aushärten eines Klebers, mit UV-Strahlung mit einer Vielzahl von UV-Strahlungsquellen, **dadurch gekennzeichnet, dass** die Vielzahl von Strahlungsquellen wenigstens zwei unterschiedliche LEDs aufweist, die unterschiedliche UV-Strahlung emittieren.

2. Vorrichtung nach Anspruch 1, **dadurch gekennzeichnet, dass** wenigstens zwei Gruppen von LEDs vorgesehen sind, wobei die LEDs innerhalb einer Gruppe jeweils im Wesentlichen dieselbe UV-Strahlung emittieren, die sich von der durch die LEDs der anderen Gruppe emittierten UV-Strahlung unterscheidet.

3. Vorrichtung nach Anspruch 1 oder 2, **dadurch gekennzeichnet, dass** wenigstens drei unterschiedliche LEDs bzw. drei Gruppen von LEDs vorgesehen sind.

4. Vorrichtung nach einem der vorhergehenden Ansprüche, **dadurch gekennzeichnet, dass** die LEDs UV-A-, UV-B- bzw. UV-C-Strahlung erzeugen.

5. Vorrichtung nach einem der vorhergehenden Ansprüche, **dadurch gekennzeichnet, dass** die durch die unterschiedlichen LEDs erzeugte Strahlung einer vorbestimmten UV-Lichtzusammensetzung und/oder -konzentration entspricht.

6. Vorrichtung nach Anspruch 5, **dadurch gekennzeichnet, dass** die durch die LEDs erzeugte Strahlung im wesentlichen der UV-Lichtzusammensetzung und/oder -konzentration eines dotierten Quecksilberstrahlers entspricht.

7. Vorrichtung nach einem der vorhergehenden Ansprüche, **dadurch gekennzeichnet, dass** die durch die LEDs erzeugte Gesamtstrahlung wenigstens in einem Teilbereich der Vorrichtung einen UV-A-Anteil zwischen 67% und 77%, einen UV-B-Anteil zwischen 13% und 23%, und einen UV-C-Anteil zwischen 5% und 15% aufweist.

8. Vorrichtung nach einem der vorhergehenden Ansprüche, **dadurch gekennzeichnet, dass** die durch die LEDs erzeugte Gesamtstrahlung wenigstens in einem Teilbereich der Vorrichtung einen UV-A-Anteil von ungefähr 72%, einen UV-B-Anteil von ungefähr 18%, und einen UV-C-Anteil von ungefähr 10%, aufweist.

9. Vorrichtung nach einem der vorhergehenden Ansprüche, **dadurch gekennzeichnet, dass** die UV-Lichtzusammensetzung und/oder -konzentration räumlich über die zu behandelnde Substanz hinweg unterschiedlich ist.

10. Vorrichtung nach einem der vorhergehenden Ansprüche, **dadurch gekennzeichnet, dass** die UV-Lichtzusammensetzung und/oder -konzentration lokal, insbesondere in einem Randbereich der Substanz, einen höheren UV-C-Anteil aufweist.

11. Vorrichtung nach einem der vorhergehenden Ansprüche, **dadurch gekennzeichnet, dass** die UV-Lichtzusammensetzung und/oder -konzentration durch die räumliche Anordnung der LEDs voreingestellt ist.

12. Vorrichtung nach einem der vorhergehenden Ansprüche, **gekennzeichnet durch** eine Ansteuervorrichtung zum Ansteuern von einzelnen LEDs oder Gruppen von LEDs.

13. Vorrichtung nach einem der vorhergehenden Ansprüche, **dadurch gekennzeichnet, dass** die UV-Lichtzusammensetzung und/oder -konzentration durch eine entsprechende Ansteuerung der LEDs bzw. der Gruppen von LEDs veränderbar ist.

14. Vorrichtung nach einem der vorhergehenden Ansprüche, **dadurch gekennzeichnet, dass** die lokale UV-Lichtzusammensetzung und/oder - konzentration durch eine entsprechende Ansteuerung der LEDs bzw. der Gruppen von LEDs veränderbar ist.

15. Verfahren zum Behandeln einer Substanz, insbesondere zum Aushärten eines Klebers, mit UV-Strahlung, mit folgenden Schritten:
- Anordnen einer auf UV-Strahlung ansprechenden Substanz im Strahlungsbereich einer Vielzahl von UV-Strahlungsquellen, die wenigstens zwei unterschiedliche LEDs aufweist, die unterschiedliche UV-Strahlung emittieren;
- Ansteuern der Vielzahl von UV-Strahlungsquellen, zum Erzeugen einer UV-Strahlung mit einer vorbestimmten UV-Lichtzusammensetzung und/oder -konzentration.

16. Verfahren nach Anspruch 15, **dadurch gekennzeichnet, dass** wenigstens zwei Gruppen von LEDs vorgesehen sind, wobei die LEDs innerhalb einer Gruppe jeweils im Wesentlichen dieselbe UV-Strahlung emittieren, die sich von der durch die LEDs der anderen Gruppe emittierten UV-Strahlung unterscheidet.

17. Verfahren nach Anspruch 15 oder 16, **dadurch gekennzeichnet, dass** wenigstens drei unterschiedliche LEDs bzw. drei Gruppen von LEDs vorgesehen sind.

18. Verfahren nach einem der Ansprüche 15 bis 17, **dadurch gekennzeichnet**, das die LEDs einzeln oder in Gruppen angesteuert werden.

19. Verfahren nach Anspruch 18, **dadurch gekennzeichnet, dass** die UV-Lichtzusammensetzung und/oder -konzentration durch eine entsprechende Ansteuerung der LEDs bzw. der Gruppen von LEDs eingestellt wird.

20. Verfahren nach einem der Ansprüche 15 bis 19, **dadurch gekennzeichnet, dass** die UV-Lichtzusammensetzung und/oder -konzentration über die Behandlungsdauer hinweg verändert wird.

21. Verfahren nach einem der Ansprüche 15 bis 20, **dadurch gekennzeichnet, dass** die UV-Lichtzusammensetzung und/oder -konzentration räumlich über die zu behandelnde Substanz hinweg verändert wird.

22. Verfahren nach einem der Ansprüche 15 bis 21, **dadurch gekennzeichnet, dass** die UV-Lichtzusammensetzung und/oder -konzentration lokal, insbesondere in einem Randbereich der Substanz, einen höheren UV-C-Anteil aufweist.

23. Verfahren nach einem der Ansprüche 15 bis 22, **dadurch gekennzeichnet, dass** die UV-Lichtzusammensetzung und/oder -konzentration wenigstens teilweise durch die räumliche Anordnung der LEDs vorgegeben ist.

24. Verfahren nach einem der Ansprüche 15 bis 23, **dadurch gekennzeichnet, dass** die Substanz ein mit UV-Strahlung aushärtbarer Kleber ist, der zwischen zwei Teilen eines Gegenstandes angeordnet ist, wobei wenigsten ein zu den UV-Strahlungsquellen weisender Teil des Gegenstandes für die UV-Strahlung im Wesentlichen transparent ist.

25. Verfahren nach Anspruch 24, **dadurch gekennzeichnet, dass** der mit UV-Strahlung aushärtbare Kleber zwischen zwei Halbseiten eines optischen Datenträgers angeordnet ist.

## Claims

1. Device for treating a substance, particularly for curing an adhesive, by ultraviolet radiation with a plurality of ultraviolet radiation sources, **characterised in that** the plurality of radiation sources comprises at least two different light-emitting diodes emitting different ultraviolet radiation.

2. Device according to claim 1, **characterised in that** at least two groups of light-emitting diodes are provided, wherein the light-emitting diodes within a group each emit substantially the same ultraviolet radiation, which differs from the ultraviolet radiation emitted by the light-emitting diodes of the other group.

3. Device according to claim 1 or 2, **characterised in that** at least three different light-emitting diodes or three groups of light-emitting diodes are provided.

4. Device according to one of the preceding claims, **characterised in that** the light-emitting diodes generate UV-A, UV-B or UV-C radiation.

5. Device according to one of the preceding claims, **characterised in that** the radiation produced by the different light-emitting diodes corresponds with a predetermined ultraviolet light composition and/or concentration.

6. Device according to claim 5, **characterised in that** the radiation produced by the light-emitting diodes substantially corresponds with the ultraviolet light composition and/or concentration of a doped mercury radiator.

7. Device according to one of the preceding claims, **characterised in that** the total radiation produced by the light-emitting diodes has at least in a part region of the device a UV-A component between 67% and 77%, a UV-B component between 13% and 23% and a UV-C component between 5% and 15%.

8. Device according to one of the preceding claims, **characterised in that** the total radiation generated by the light-emitting diodes has at least in a part region of the device a UV-A component of approximately 72%, a UV-B component of approximately 18% and a UV-C component of approximately 10%.

9. Device according to one of the preceding claims, **characterised in that** the ultraviolet light composition and/or concentration differs spatially over the substance to be treated.

10. Device according to one of the preceding claims, **characterised in that** the ultraviolet light composition and/or concentration has a locally, particularly in an edge region of the substance, higher UV-C component.

11. Device according to one of the preceding claims, **characterised in that** the ultraviolet light composition and/or concentration is preset by the physical arrangement of the light-emitting diodes.

12. Device according to one of the preceding claims, **characterised by** a drive control device for drive control of individual light-emitting diodes or groups of light-emitting diodes.

13. Device according to one of the preceding claims, **characterised in that** the ultraviolet light-composition and/or concentration is variable by a corresponding drive control of the light-emitting diodes or the groups of light-emitting diodes.

14. Device according to one of the preceding claims, **characterised in that** the local ultraviolet light composition and/or concentration is variable by a corresponding drive control of the light-emitting diodes or the groups of light-emitting diodes.

15. Method of treating a substance, particularly for curing an adhesive, by ultraviolet radiation, comprising the following steps:
- arranging a substance, which responds to ultraviolet radiation, in the radiation region of a plurality of ultraviolet radiation sources having at least two different light-emitting diodes emitting different ultraviolet radiation; and
- controlling in drive the plurality of ultraviolet radiation sources for generating an ultraviolet radiation with a predetermined ultraviolet light composition and/or concentration.

16. Method according to claim 15, **characterised in that** at least two groups of light-emitting diodes are provided, wherein the light-emitting diodes within one group each emit substantially the same ultraviolet radiation, which differs from the ultraviolet radiation emitted by the light-emitting diodes of the other groups.

17. Method according to claim 15 or 16, **characterised in that** at least three different light-emitting diodes or three groups of light-emitting diodes are provided.

18. Method according to one of claims 15 to 17, **characterised in that** the light-emitting diodes are controlled in drive individually or in groups.

19. Method according to claim 18, **characterised in that** the ultraviolet light composition and/or concentration is set by a corresponding control in drive of the light-emitting diodes or the groups of light-emitting diodes.

20. Method according to one of claims 15 to 19, **characterised in that** the ultraviolet light composition and/or concentration is variable over the treatment duration.

21. Method according to one of claims 15 to 20, **characterised in that** the ultraviolet light composition and/or concentration is varied three-dimensionally over the substance to be treated.

22. Method according to one of claims 15 to 21, **characterised in that** the ultraviolet light composition and/or concentration has a locally, particularly in an edge region of the substance, higher UV-C component.

23. Method according to one of claims 15 to 22, **characterised in that** the ultraviolet light composition and/or concentration is predetermined at least partly by the physical arrangement of the light-emitting diodes.

24. Method according to one of claims 15 to 23, **characterised in that** the substance is an adhesive which is curable by ultraviolet radiation and which is arranged between two parts of an article, wherein at least one part, which faces the ultraviolet radiation sources, of the article is substantially transparent to the ultraviolet radiation.

25. Method according to claim 24, **characterised in that** the adhesive curable by ultraviolet radiation is arranged between two half sides of an optical data carrier.

## Revendications

1. Dispositif pour traiter une substance, en particulier pour durcir un adhésif, par rayonnement UV avec une multitude de sources de rayonnement UV, **caractérisé en ce que** la multitude de sources de rayonnement présente au moins deux LED différentes, qui émettent un rayonnement UV différent.

2. Dispositif selon la revendication 1, **caractérisé en ce qu'**au moins deux groupes de LED sont prévus, où les LED émettent à l'intérieur d'un groupe respectivement sensiblement le même rayonnement UV, qui se distingue du rayonnement UV émis par les LED de l'autre groupe.

3. Dispositif selon la revendication 1, **caractérisé en ce qu'**au moins trois LED différentes ou trois groupes de LED sont prévus.

4. Dispositif selon l'une des revendications précédentes, **caractérisé en ce que** les LED produisent un rayonnement UV-A, UV-B ou UV-C.

5. Dispositif selon l'une des revendications précédentes, **caractérisé en ce que** le rayonnement produit par les différentes LED correspond à une composition et/ou concentration de lumière UV prédéterminée.

6. Dispositif selon la revendication 5, **caractérisé en ce que** le rayonnement produit par les LED correspond sensiblement à la composition et/ou concentration de lumière UV d'un émetteur de rayons à mercure dopé.

7. Dispositif selon l'une des revendications précédentes, **caractérisé en ce que** le rayonnement total produit par les LED présente au moins dans une zone partielle du dispositif une proportion d'UV-A située entre 67 % et 77 %, une proportion d'UV-B située entre 13 % et 23 %, et une proportion d'UV-C située entre 5 % et 15 %.

8. Dispositif selon l'une des revendications précédentes, **caractérisé en ce que** le rayonnement total produit par les LED présente au moins dans une zone partielle du dispositif une proportion d'UV-A d'environ 72 %, une proportion d'UV-B d'environ 18 %, et une proportion d'UV-C d'environ 10 %.

9. Dispositif selon l'une des revendications précédentes, **caractérisé en ce que** la composition et/ou concentration de la lumière UV est différente spatialement au-delà de la substance à traiter.

10. Dispositif selon l'une des revendications précédentes, **caractérisé en ce que** la composition et/ou concentration de la lumière UV présente localement, en particulier dans une zone périphérique de la substance, une proportion d'UV-C plus élevée.

11. Dispositif selon l'une des revendications précédentes, **caractérisé en ce que** la composition et/ou concentration de la lumière UV est pré-réglée par la disposition spatiale des LED.

12. Dispositif selon l'une des revendications précédentes, **caractérisé par** un système de commande pour commander les différentes LED ou groupes de LED.

13. Dispositif selon l'une des revendications précédentes, **caractérisé en ce que** la composition et/ou concentration de la lumière UV peut être modifiée grâce à une commande correspondante des LED ou groupes de LED.

14. Dispositif selon l'une des revendications précédentes, **caractérisé en ce que** la composition et/ou concentration locale de la lumière UV peut être modifiée grâce à une commande correspondante des LED ou groupes de LED.

15. Procédé pour traiter une substance, en particulier pour durcir un adhésif, par rayonnement UV, comprenant les étapes suivantes consistant à:
- disposer une substance répondant au rayonnement UV dans la zone de rayonnement d'une multitude de sources de rayonnement UV, qui présente au moins deux LED différentes, qui émettent un rayonnement UV différent;
- commander la multitude de sources de rayonnement UV, pour produire un rayonnement UV ayant une composition et/ou concentration de la lumière UV prédéterminée.

16. Procédé selon la revendication 16, **caractérisé en ce qu'** au moins deux groupes de LED sont prévus, où les LED émettent à l'intérieur d'un groupe respectivement sensiblement le même rayonnement UV, qui se distingue du rayonnement UV émis par les LED de l'autre groupe.

17. Procédé selon la revendication 15 ou 16, **caractérisé en ce qu'**au moins trois LED différentes ou trois groupes de LED sont prévus.

18. Procédé selon l'une des revendications 15 à 17, **caractérisé en ce que** les LED sont commandées individuellement ou en groupes.

19. Procédé selon la revendication 18, **caractérisé en ce que** la composition et/ou concentration de la lumière UV est ajustée grâce à une commande correspondante des LED ou groupes de LED.

20. Procédé selon l'une des revendications 15 à 19, **caractérisé en ce que** la composition et/ou concentration de la lumière UV est modifiée au-delà de la durée de traitement.

21. Procédé selon l'une des revendications 15 à 20, **caractérisé en ce que** la composition et/ou concentration de la lumière UV est modifiée spatialement au-delà de la substance à traiter.

22. Procédé selon l'une des revendications 15 à 21, **caractérisé en ce que** la composition et/ou concentration de la lumière UV présente localement, en particulier dans une zone périphérique de la substance, une proportion d'UV-C plus élevée.

23. Procédé selon l'une des revendications 15 à 22, **caractérisé en ce que** la composition et/ou concentration de la lumière UV est prédéterminée au moins partiellement par la disposition spatiale des LED.

24. Procédé selon l'une des revendications 15 à 23, **caractérisé en ce que** la substance est un adhésif durcissable par rayonnement UV, qui est disposé entre deux parties d'un objet, où au moins une partie de l'objet pointant dans la direction des sources de rayonnement UV est sensiblement transparente au rayonnement UV.

25. Procédé selon la revendication 24, **caractérisé en ce que** l'adhésif durcissable par rayonnement UV est disposé entre deux moitiés de face d'un support de données optique.
